# EUROPEAN PATENT APPLICATION

(11) **EP 2 325 998 A1**
(43) Date of publication of application: **25.05.2011**
(21) Application number: 09814469.4
(22) Date of filing: 03.09.2009
(51) Int. Cl.: H02N 2/00, G02B 7/04, H01L 41/09

(54) **PIEZOELECTRIC ACTUATOR**

(30) Priority: 17.09.2008 JP 2008237733
(71) Applicant: Konica Minolta Opto, Inc., Hachioji-shi, Tokyo 192-8505 (JP)
(72) Inventor: YONETAKE, Junichiro, Tokyo 192-8505 (JP); SHIBATANI, Kazuhiro, Tokyo 192-8505 (JP); SAEKI, Yoshihiro, Tokyo 192-8505 (JP)
(74) Representative: Henkel, Feiler & Hänzel
(86) International application number: PCT/JP2009/065400
(87) International publication number: WO 2010/032624

(57) **Abstract**

An SIDM device (1) is provided with a pillar-shaped piezoelectric element (2) which expands/contracts in the axial direction by the application of a voltage, a pillar-shaped drive shaft (3) which is fixed to the end surface of the piezoelectric element (2) in the axial direction and is displaced by the expansion/contraction of the piezoelectric element (2), a supporting member (4) which has a fixed portion (40) fixed to the drive shaft (3) and supports the piezoelectric element (2) and the drive shaft (3) with the fixed portion (40) between the supporting member (4), and the piezoelectric element (2) and the drive shaft: (3), and a moving body (5) which is frictionally engaged with the drive shaft (3) and moves in the axial direction of the drive shaft (3). A central axis (L2) of the piezoelectric element (2) and a central axis (L3) of the drive shaft (3) are offset to each other, and the central axis (L3) of the drive shaft (3) and a central axis (L4) of the drive shall (3) in the axial direction in the entire fixed portion (40) are offset to each other. As a result, the drive shaft is able to accurately perform oscillating motion.

## Description

### TECHNICAL FIELD

The present invention relates to a piezoelectric actuator.

### BACKGROUND TECHNOLOGY

Heretofore, as a piezoelectric actuator which allows a moving body to reciprocate in nanometer order by application of voltage, it has been proposed an actuator called SIDM device (hereinafter referred to as an SIDM device. "SIDM" is a trade mark). In addition, a piezoelectric actuator being a kind of driving method of the SIDM device called LVA method has been proposed (for example, refer to Patent Document 1).

The SIDM device is provided with a piezoelectric element which expands and contracts by application of voltage, a driving rod which is displaced by expansion and contraction of the piezoelectric element, a supporting member which supports the piezoelectric element or the driving rod, a moving body which shifts in the rod direction of the aforesaid driving rod with being frictionally engaged with the driving rod, and the like, and is arranged in such a way that the aforesaid moving body is made to move in the rod direction of the driving rod. Such the SIDM device is generally constituted in such a manner that the supporting member supports an opposite end to the driving rod in the piezoelectric element, but, in particular, a SIDM device called LVA method is constituted in such a manner that the supporting member supports the driving rod, or supports a vicinity of a joining part between the diving rod and the piezoelectric element.

In such the piezoelectric element, a driving rod sometimes performs oscillating motion when the piezoelectric element expands and contracts. If such the oscillating motion of the driving rod is used, it becomes possible to adjust more accurately an optical axis of optical element in an optical apparatus such as a small camera and a laser module.

### PRIOR ARTS

### PATENT DOCUMENTS

Patent Document 1: Japanese Patent Application Publication No. 2002-95274

### SUMMARY OF THE INVENTION

### ISSUES TO BE SOLVED BY THE INVENTION

In the conventional SIDM device, however, a subject matter was to allow a piezoelectric element to be displaced in the rod direction of a driving rod, and it was unclear that in what situation the oscillating motion occurred, and therefore, the oscillating motion could not be accurately performed.

The issue of the present invention is to provide a piezoelectric actuator which allows a driving rod to accurately perform oscillating motion.

### MEASURES TO SOLVE THE ISSUE

The invention described in Claim 1 is, in a piezoelectric actuator, provided with
a columnar piezoelectric element which expands and contracts in an axis direction by application of voltage,
a columnar driving rod which is fixed to an end surface in the rod direction of the above piezoelectric element, and is displaced by expansion and contraction of the above piezoelectric element,
a supporting member which has a fixed part fixed to the above piezoelectric element or the above driving rod, and at the same time, supports the above piezoelectric element and the above driving rod through the above fixed part, and
a moving body which is frictionally engaged with the above driving rod, and moves in the rod direction of the above driving rod,
wherein a central axis of the above piezoelectric element
and a central axis of the above driving rod are offSet

The invention described in Claim 2 is, in a piezoelectric actuator, provided with
a columnar piezoelectric element which expands and contracts in an axis direction by application of voltage,
a columnar driving rod which is fixed to an end surface in the rod direction of the above piezoelectric element, and is displaced by expansion and contraction of the above piezoelectric element,
a supporting member which has a fixed part fixed to the above piezoelectric element, and at the same time, supports the above piezoelectric element and the above driving rod through the above fixed part, and
a moving body which is frictionally engaged with the above driving rod, and moves in the rod direction of the above driving rod,
wherein a central axis of the above piezoelectric element and
a central axis in the axis direction of the above piezoelectric element of the whole of the above fixed part are offset.

The invention described in Claim 3 is, in a piezoelectric actuator, provided with
a columnar piezoelectric element which expands and contracts in an axis direction by application ofvoltage,
a columnar driving rod which is fixed to an end surfaces in the axis direction of the above piezoelectric element, and is displaced by expansion and contraction of the above piezoelectric element,
a supporting member which has a fixed part fixed to the above driving rod, and at the same time, supports the above piezoelectric element and the above driving rod through the above fixed part, and
a moving body which is frictionally engaged with the above driving rod, and moves in the rod direction of the above driving rod,
wherein a central axis of the above driving rod and
a central axis in the rod direction ofthe above driving rod of the whole of the above fixed part are offset.

The invention described in Claim 4, wherein, in a piezoelectric actuator described in Claim 1,
a central axis of the above piezoelectric element
is offset with regard to the central axis of the above driving rod by a distance of 20 to 50% provided that the maximum size in a section perpendicular to the rod direction in the above driving rod is set to be 100%.

The invention described in Claim 5, wherein, in a piezoelectric actuator described in Claim 2,
the above supporting member
is fixed only to a partial area in a circumferential direction of side circumference surfaces of the above piezoelectric element.

The invention described in Claim 6, wherein, in a piezoelectric actuator described in Claim 5,
the above supporting member
is formed in a U-shape and makes close contact only with the above partial area of the side circumference surfaces of the above piezoelectric element

The invention described in Claim 7, wherein, in a piezoelectric actuator described in Claim 2,
the above supporting member
makes close contact with an opposite end surface to the above driving rod in the axis direction of the piezoelectric element, and at the same time, is fixed only to a partial area of the aforesaid end surface, and
the central axis in the axis direction of the above piezoelectric element of the whole of the above fixed part is offset with regard to the central axis of the above piezoelectric element

The invention described in Claim 8, wherein, in a piezoelectric actuator described in Claim 3,
the above supporting member
is fixed only to a partial area in a circumferential direction of side circumference surfaces of the above driving rod.

The invention described in Claim 9, wherein, in a piezoelectric actuator described in Claim 8,
the above supporting member
is formed in a U-shape and makes close contact only with the above partial area of the side circumference surfaces of the above driving rod.

The invention described in Claim 10, wherein, in a piezoelectric actuator descried in any one of Claims 1,3,4,8 and 9,
the above supporting member is fixed to the above driving rod,
the central axis of the above driving rod is offset in the prescribed direction with regard to the central axis of the above piezoelectric element, and
the above central axis of the whole of the above fixed part is offset in the prescribed direction with regard to the central axis of the above driving rod.

The invention described in Claim 11, wherein, in a piezoelectric actuator described in any one of Claims 1, 3,4, 8 and 9,
the above supporting member is fixed to the above driving rod,
the central axis of the above driving rod is offset in the prescribed direction with regard to the central axis of the above piezoelectric element, and
the above central axis of the whole of the above fixed part is offset in the opposite direction to the above prescribed direction with regard to the central axis of the above driving rod.

### EFFECTS OF THE INVENTION

According to the invention described in Claim 1, since the central axis of the piezoelectric element and the central axis of the driving rod are offset to each other, when the piezoelectric element is expanded and contracted by application ofvoltage, the driving rod is displaced in the rod direction and in the offset direction between the central axes, and as a result oscillating motion is performed. Therefore, the driving rod is allowed to accurately perform oscillating motion.

According to the invention described in Claim 2, since the central axis of the piezoelectric element and the central axis in the axis direction of piezoelectric element of the whole of the fixed part are offset to each other, when the piezoelectric element is expanded and contracted by application of voltage, the driving rod is displaced in the rod direction and in the offset direction between the central axes, and as a result oscillating motion is performed Therefore, the driving rod is allowed to accurately perform oscillating motion.

According to the invention described in Claim 3, since the central axis of the driving rod and the central axis in the rod direction of the driving rod of the whole of the fixed part are offset to each other, when the piezoelectric element is expanded and contracted by application of voltage, the driving rod is displaced in the rod direction and in the offset direction between the central axes, and as a result oscillating motion is performed. Therefore, the driving rod is allowed to accurately perform oscillating motion.

According to the invention described in Claim 4, since the central axis of the piezoelectric element is offset with regard to the central axis of the driving rod by a distance of 20 to 50%, provided that the maximum size in a section perpendicular to the rod direction of the driving rod is set to be 100%, compared to a case where a distance of smaller than 20% is offset or a case where a distance of larger than 50% is offset, the driving rod is allowed to more accurately perform oscillating motion.

According to the invention described in Claim 5, since the supporting member is fixed only to a partial area in a circumferential direction of side circumference surfaces of the piezoelectric element, the central axis of the piezoelectric element and the above central axis of the whole of the fixed part become a state ofbeing offset to each other. Therefore, by allowing the piezoelectric element to expand and contract by application of voltage, oscillating motion is allowed to be performed in the offset direction between the central axis of the piezoelectric element and the above central axis of the whole of the fixed part.

According to the invention described in Claim 6, since the supporting member is formed in a U-shape and makes close contact only with the partial area of the side circumference surfaces of the above piezoelectric element, being different from a case where the supporting member also makes close contact with other than a partial area, when the supporting member is adhered and fixed to a partial area, adhesive can be prevented from spreading outside of the partial area by the adhesive going through the contacting part. Therefore, since works of adhesion of the supporting member with the piezoelectric element can be reduced, the piezoelectric actuator can be produced more easily.

According to the invention described in Claim 7, the supporting member makes close contact with an opposite end surface to the driving rod in the axis direction of the piezoelectric element, and at the same time, is fixed to a partial area of this end surface, and the central axis in the axial direction of the piezoelectric element of the whole of the fixed part is offset with regard to the central axis of the piezoelectric element. Therefore, by allowing the piezoelectric element to expand and contract by application of voltage, oscillating motion is allowed to be performed in the offset direction between the central axis of the piezoelectric element and the central axis of the whole of the fixed part of the supporting member.

According to the invention described in Claim 8, since the supporting member is fixed only to a partial area in a circumferential direction of side circumference surfaces of the driving rod, the central axis of the driving rod and the central axis of the whole of the fixed part become a state ofbeing offset to each other. Therefore, by allowing the piezoelectric element to expand and contract by application of voltage, oscillating motion is allowed to be performed in the offset direction between the central axis of the driving rod and the above central axis of the whole of the fixed part.

According to the invention described in Claim 9, since the supporting member is formed in a U-shape and makes close contact only with the partial area of the side circumference surfaces of the driving rod, being different from a case where the supporting member also makes close contact with other than a partial area, when the supporting member is adhered and fixed to a partial area, adhesive can be prevented from spreading outside of the above partial area by the adhesive going through the contacting part. Therefore, since works of adhesion of the supporting member with the driving rod can be reduced, the piezoelectric actuator can be produced more easily.

According to the invention described in Claim 10, since the central axis of the driving rod is offset in the prescribed direction with regard to the central axis of the piezoelectric element, by this offset (hereinafter referred to as the former offset), when the piezoelectric element expands, the driving rod performs oscillating motion in the prescribed direction, and when the piezoelectric element contracts, the driving rod performs oscillating motion in the opposite direction to the prescribed direction.

On the other hand, since the supporting member is fixed to the driving rod, and the central axis of the whole of the fixed part is offset in the prescribed direction with regard to the central axis of the driving rod, by this offset (hereinafter referred to as the latter offset), when the piezoelectric element expands, the driving rod performs oscillating motion in the opposite direction to the prescribed direction, and when the piezoelectric element contracts, the driving rod performs oscillating motion in the prescribed direction. Namely, the driving rod performs oscillating motion in the opposite direction to the oscillating motion by the former offset.

Since the amount of displacement of the oscillation caused by the latter offset is larger than that caused by the former offset as a result, the driving rod performs fine oscillating motion.

Therefore, compared to a case where the amount of displacement of the oscillation is simply controlled only by the former offset or the latter offset, a finer control can be carried out.

According to the invention described in Claim 11, since the central axis of the driving rod is offset in the prescribed direction with regard to the central axis of the piezoelectric element, by this offset (hereinafter referred to as the former offset), when the piezoelectric element expands, the driving rod performs oscillating motion in the prescribed direction, and when the piezoelectric element contracts, the driving rod performs oscillating motion in the opposite direction to the prescribed direction.

Further, since the supporting member is fixed to the driving rod, and the central axis of the whole of the fixed part is offset in the opposite direction to the prescribed direction with regard to the central axis of the driving rod, by this offset (hereinafter referred to as the latter offset), when the piezoelectric element expands, the driving rod performs oscillating motion in the prescribed direction, and when the piezoelectric element contracts, the driving rod performs oscillating motion in the opposite direction to the prescribed direction. Namely, the driving rod performs oscillating motion in the opposite direction to the oscillating motion by the former offset.

Therefore, compared to a case where oscillating motion is performed only by the former offset or the latter offset, the oscillating motion having a large amount of displacement can be carried out.

### BRIEF DESCRIPTION OF THE DRAWINGS

Fig. 1 is a schematic diagram showing a skeleton framework of the piezoelectric actuator relating to the present invention.
Fig. 2 is a perspective illustration showing the piezoelectric element, the driving rod, and the supporting member.
Figs. 3a and 3b show each of central axes of the piezoelectric element, the driving rod, and the fixed part of the supporting member, and Fig. 3c shows physical properties of each member of the piezoelectric actuator relating to the present invention.
Fig. 4 is a figure describing a motion of the piezoelectric actuator relating to the present invention.
Fig. 5 shows each of central axes of the piezoelectric element, the driving rod, and the fixed part of the supporting member.
Figs. 6a and 6b are figures describing oscillating motion ofthe driving rod of the piezoelectric actuator of embodiments, and Fig. 6c is a figure showing evaluation results of oscillating motion by the piezoelectric actuator of embodiments.

### MODE FOR CARRYING OUT THE INVENTION

Hereinafter, preferred embodiments of the present invention will be described with reference to figures.

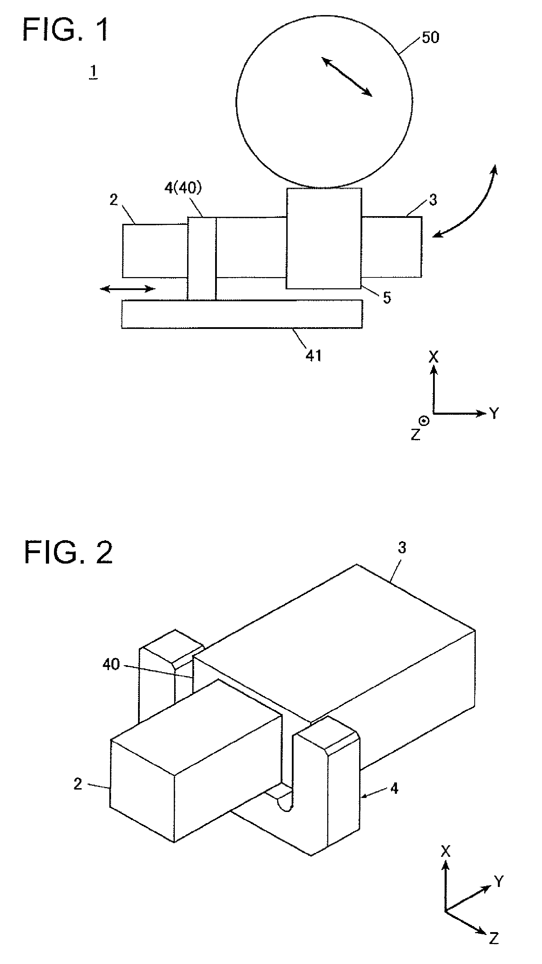

Fig. 1 is a figure showing a schematic illustration of a so-called camera shake compensation device, which displaces a lens in the perpendicular direction to an optical axis using SIDM device 1 as the piezoelectric actuator relating to the present invention.

As shown in Fig.1, SIDM device 1 is provided with piezoelectric element 2, driving rod 3, supporting member 4, moving body 5, and the like. Further, lens 50 is arranged on moving body 5.

Piezoelectric element 2 is a square columnar member which expands and contracts along an axis direction thereof (hereinafter referred to as Y-axis direction, and the tip of driving rod 3 is referred to as positive Y-axis direction) by application of voltage from a control device (not illustrated), and is a piezoelectric element in the present embodiment

Driving rod 3 is a square columnar member extending to Y-axis direction, and is assembled in such a way that driving rod 3 is fixed to an end surface of piezoelectric element 2 in Y-axis direction, and is displaced in Y-axis direction by expansion and contraction of piezoelectric element 2.

Supporting member 4 is a member supporting piezoelectric element 2 and driving rod 3 on base member 41, and, in the present embodiment, has fixed part 40 fixed to driving rod 3, and supports piezoelectric element 2 and driving rod 3 through fixed part 40.

Moving body 5 slides with regard to driving rod 3, and is assembled in such a way that moving body 5 is frictionally engaged with driving rod 3, and is displaced in Y-axis direction by expansion and contraction of piezoelectric element 2. In the present embodiment, moving body 5 supports lens 50 in an imaging unit (not illustrated), and it is arranged so that moving body 5 moves lens 50 by allowing lens 50 to follow the movement of moving body 5. In more detail, it is assembled so that an optical axis direction of lens 50 agrees with Z-axis direction, and camera shake compensation of an imagine unit is carried out by movement of moving body 5 to Y-axis direction, and the like.

Subsequently, SIDM device 1 will be described in more detail.

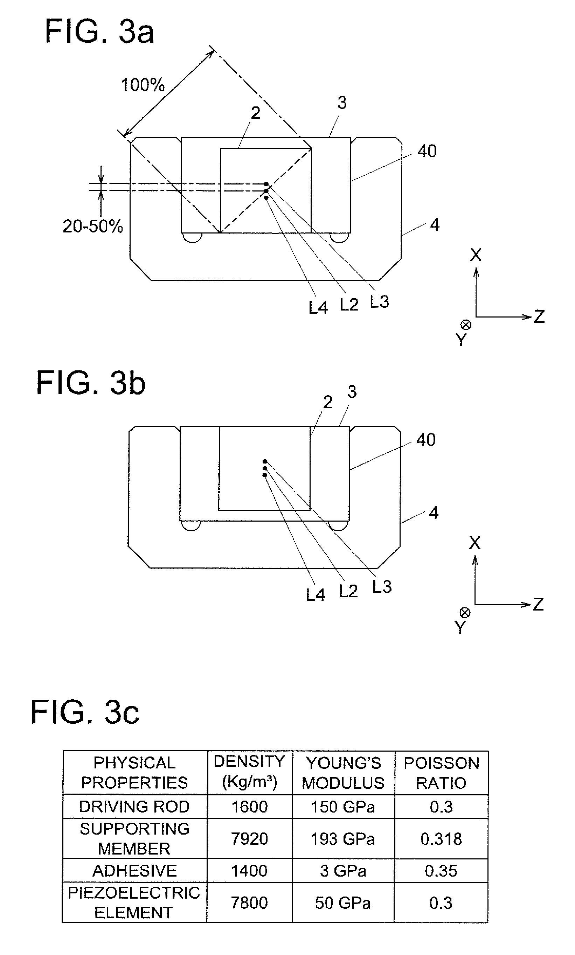

Fig. 2 is a perspective illustration showing piezoelectric element 2, driving rod 3, and supporting member 4, and Fig. 3a show each of central axes L2 to L4 of piezoelectric element 2, driving rod 3, and fixed part 40 of supporting member4.

As shown in Fig. 2, driving rod 3 is fixed so that central axes L3 and L2 are offset to each other with regard to piezoelectric element 2. In more detail, as shown in Fig. 3a, central axis L3 of driving rod 3 is offset in the X-axis direction (hereinafter referred to as positive X-axis direction) with regard to central axis L2 of piezoelectric element 2, and the magnitude of this offset, that is, a distance between two central axes L2 and L3, is made to be 20 to 50%, provided that the maximum size of piezoelectric element 2 in a XZ section (being a length of a diagonal line in the XZ section in the present embodiment) is set to be 100%.

In addition, as shown in Figs. 2 and 3a, fixed part 40 is formed in a U-shape, and is fixed by making close contact with only three surfaces among side circumference surfaces of driving rod 3 excluding one surface in positive X-axis (the upper side surface in the figure). With this assembly, central axis L4 in the Y-axis direction of the whole of fixed part 40 is offset in the negative direction with regard to central axis L3 of driving axis 3.

As shown in Fig. 2, when the width direction and the thickness direction of piezoelectric element 2 are assumed as Z-axis direction and X-axis direction respectively, the sizes of piezoelectric element of the present embodiment in X-axis, Z-axis, and Y-axis directions are 0.5 mm, 0.5 mm, and 1.6 mm respectively. As such piezoelectric element 2, heretofore known piezoelectric element can be used.

In driving rod 3, like piezoelectric element 2, the X-axis direction and the Z-axis direction are the thickness direction and the width direction respectively, and the sizes in X-axis, Z-axis, and Y-axis directions are 1.0 mm, 1.7 mm, and 3.0 mm respectively. As such driving rod 3, heretofore known driving rod can be used. Further, an adhesive is preferably used to fix driving rod 3 with piezoelectric element 2 such as above.

The size of supporting member 4 in the Y-axis direction is 0.5 mm. The sizes of the internal circumference (being the size of fixed part 40) correspond to the sizes of driving rod 3 in the X-axis direction and the Z-axis direction, and the sizes of the outer circumference thereof in the X-axis direction and the Z-axis direction are 1.5 mm and 2.7 mm. As such supporting member 4, heretofore known supporting member made of SUS can be used. Further, an adhesive is preferably used to fix supporting member 4 with driving rod 3 such as above.

Physical properties of driving rod 3, supporting member 4, piezoelectric element 2, and the adhesive used between members can be such as shown in, for example, Fig. 3.

Subsequently, motion of SIDM device 1 will be described.

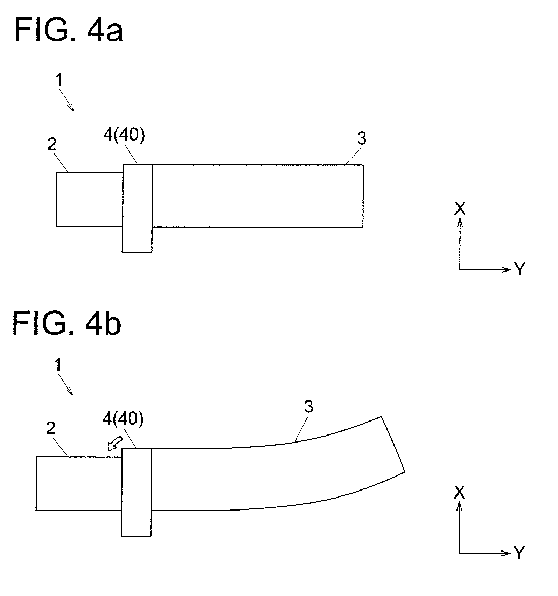

Figs. 4a and 4b show states of piezoelectric element 2 being contracted and being expanded respectively. In these Figs. 4a and 4b, SIDM device 1 is illustrated in a simplified form.

First, as shown in Fig. 4a, a saw-tooth wave drive pulse having a gradual rising portion and a steep falling portion is applied to piezoelectric element 2 in a contracted state.

With this application, when the driving pulse gradually rises, piezoelectric element 2 gradually expands toward the negative direction of the Y-axis (being a direction from right to left of Fig. 4a).

At the gradual rising, in the present embodiment, central axis L3 of driving rod 3 is offset in the positive X-axis direction with regard to central axis L2 of piezoelectric element 2, therefore the portion of the positive X-axis direction side (being the upper side of the figure) of driving rod 3 displaces larger than the portion of the negative X-axis direction side (being the lower side of the figure) thereof as shown in Fig. 4b, and as a result, driving rod 3 bends in the positive X-axis direction, namely driving rod 3 performs oscillating motion in the positive X-axis direction.

Further, in the present embodiment, central axis L4 in the Y-axis direction of the whole of fixed part 40 is offset in the negative X-axis direction with regard to central axis L3 of driving rod 3, therefore the portion of the positive X-axis direction side of driving rod 3 displaces larger than the portion of the negative X-axis direction side thereof, and as a result, driving rod 3 bends further in the positive X-axis direction.

Though the principle of the oscillating motion such as above is not fully clarified, it is presumed that, when the form of piezoelectric element 2 changes to transfer power to driving rod 3 as shown in Fig. 4b with a broken arrow, the upper right portion of the figure in piezoelectric element 2 is transformed in the negative Y-axis direction so as to pull the upper portion of driving rod 3, and as a result, driving rod 3 performs oscillating motion toward the upper side.

In the case where driving rod 3 is displaced in the X-axis direction by offsetting central axis L3 of driving rod 3 and central axis L2 of piezoelectric element 2, and driving rod 3 is displaced in the X-axis direction by offsetting central axis L4 ofthe whole of fixed part 40 and central axis L3 of driving rod 3, the amount of the displacement in the X-axis direction caused by the latter offset is larger than that caused by the former offset.

When driving rod 3 slowly displaces, moving body 5 moves in the positive X-axis direction together with driving rod 3 by friction engagement force to driving rod 3. With this, in a camera shake compensation device (refer to Fig. 1) using SIDM device 1 of the present invention, lens 50 supported by moving body 5 moves in the positive X-axis direction, and as a result, camera shake compensation of the above imaging unit is carried out. In order to increase the displacement of moving body 5 in the X-axis direction, it is only necessary for moving body 5 to be arranged away from supporting member 4. In this arrangement, since the direction of the optical axis of lens 50 remains matched in the Z-axis direction, degradation of imaging properties of the imaging unit can be prevented.

On the other hand, when the driving pulse rapidly falls, piezoelectric element 2 rapidly contracts.

At this rapid falling, in the present embodiment, since central axis L3 of driving rod 3 is offset in the positive X-axis direction with regard to central axis L2 of piezoelectric element 2, the portion of the positive X-axis direction side of driving rod 3 displaces larger than the portion of the negative X-axis direction side thereof, as shown in the above described Fig. 4a, and as a result, driving rod 3 bends in the negative X-axis direction, namely driving rod 3 performs oscillating motion in the negative X-axis direction.

Further, in the present embodiment, central axis L4 in the Y-axis direction of the whole of fixed part 40 is offset in the negative X-axis direction with regard to central axis L3 of driving rod 3, therefore the portion of the positive X-axis direction side of driving rod 3 displaces larger than the portion of the negative X-axis direction side thereof, and as a result, driving rod 3 bends further in the negative X-axis direction.

When driving rod 3 rapidly displaces, moving body 5 overcomes the friction engagement force by inertial force, and is retained at the position where moving body 5 stayed.

After that, by applying successively the above driving pulse to piezoelectric element 2, it is possible to generate reciprocal vibration having different velocities on driving rod 3 to move successively moving body 5 in the positive X-axis direction.

In the above motion, when driving rod 3 slowly displaces in the Y-axis direction, moving body 5 moves in the Y-axis direction together with driving rod 3 by the friction engagement force. On the other hand, when driving rod 3 rapidly displaces in the Y-axis direction, moving body 5 overcomes the friction engagement force by inertial force, and is retained at the position where moving body 5 stayed in the Y-axis direction. To averse the directions of such move in the Y-axis direction and the above move in the X-axis direction, it is only necessary to change a wave form of a saw-tooth wave drive pulse applied to piezoelectric element 2 into a wave form having a steep rising portion and a gradual falling portion. The driving wave form to be applied is not limited to the saw-tooth wave drive pulse described here, but it is also possible to apply a rectangular wave having a duty ratio suitable for the drive, or wave forms having rising and falling properties suitable for the other drives.

According to SIDM device 1 described above, since central axis L2 of piezoelectric element 2 and central axis 3 of driving rod 3 are offset to each other in the X-axas direction, when piezoelectric element 2 is expanded and contracted by application of voltage, driving rod 3 displaces in the Y-axis direction and in the offset direction between central axes L2 and L3, that is, in the X-axis direction, and as a result, oscillating motion is performed. Further, central axis L2 of piezoelectric element 2 is offset with regard to central axis L3 of driving rod 3 by a distance of 20 to 50%, provided that the maximum size in the XZ-cross section of driving rod 3 is set to 100%. Therefore, the driving rod surely performs oscillating motion, compared to cases where the offset is made only by distance of less than 20% or larger than 50%.

Further, since central axis L3 of driving rod 3 which is fixed to supporting member 4 and central axis L4 in the Y-axis direction of the whole of fixed part 40 are offset to each other in the X-axis direction, when piezoelectric element 2 is expanded and contracted by application of voltage, driving rod 3 displaces in the Y-axis direction and in the offset direction between central axes L3 and L4, that is, in the X-axis direction, and as a result, oscillating motion is performed.

In addition, since the displacement of driving rod 3 in the X-axis direction due to offset between central axis L3 of driving rod 3 and central axis L2 of piezoelectric element 2 and the displacement of driving rod 3 in the X-axis direction due to offset between central axis L4 ofthe whole of fixed part 40 and central axis L3 of driving rod 3 occurred in the same direction, driving rod 3 more certainly performs oscillating motion with a large amount of displacement.

According to the above, driving rod 3 is allowed to perform oscillating motion having a large amount of displacement.

Further, since central axis L2 of piezoelectric element 2 and central axis L3 of driving rod 3 are offset to each other, and central axis L3 of driving rod 3 and central axis L4 of the whole of fixed part 40 are offset to each other, impedance property of SIDM device 1 can be improved.

In addition, since fixed part 40 of supporting member 4 is formed in a U-shape and makes close contact only with three surfaces excepting for one surface in the positive X-axis direction of the side circumference surfaces of driving rod 3, being different from a case of also making close contact with the above one surface in the positive X-axis direction, when supporting member 4 is adhered and fixed to driving rod 3, adhesive can be prevented from spreading to the above one surface by the adhesive going through the contacting part. Therefore, since works of adhesion of supporting member 4 with driving rod 3 can be reduced, SIDM device 1 can be produced more easily.

The present invention should not be construed as limitations on the above embodiment, but as a matter of course, the present invention may be adequately changed or modified.

For example, in the above embodiment, it was describe that central axis L3 of driving rod 3 is offset in the positive X-axis direction with regard to central axis L2 of piezoelectric element 2, and central axis L4 of fixed part 40 of supporting member 4 is offset in the negative X-axis direction with regard to central axis L3 of driving rod 3, but an embodiment may be that central axis L3 of driving rod 3 is offset in the positive X-axis direction with regard to central axis L2 of piezoelectric element 2, and central axis L4 of fixed part 40 of supporting member 4 is similarly offset in the positive X-axis direction with regard to central axis L3 of driving rod 3. In this case, both the displacement of driving rod 3 in the X-axis direction due to offset between central axis L3 of driving rod 3 and central axis L2 of piezoelectric element 2 and the displacement of driving rod 3 in the X-axis direction due to offset between central axis L4 of the whole of fixed part 40 and central axis L3 of driving rod 3 occurs in the reverse direction. However, as described above, the amount of displacement by the latter offset is larger than that by the former offset, to result in slight oscillating motion of driving rod 3. Therefore, compared to a case where the amount of oscillating motion is simply controlled only by the former offset or the latter offset, a finer control can be carried out.

Further, it was described that central axis L3 of driving rod 3 was offset with regard to central axis L2 of piezoelectric element 2, and central axis L4 of fixed part 40 of supporting member 4 was offset with regard to central axis L3 of driving rod 3, but an embodiment may be that one of the above offsets occurs.

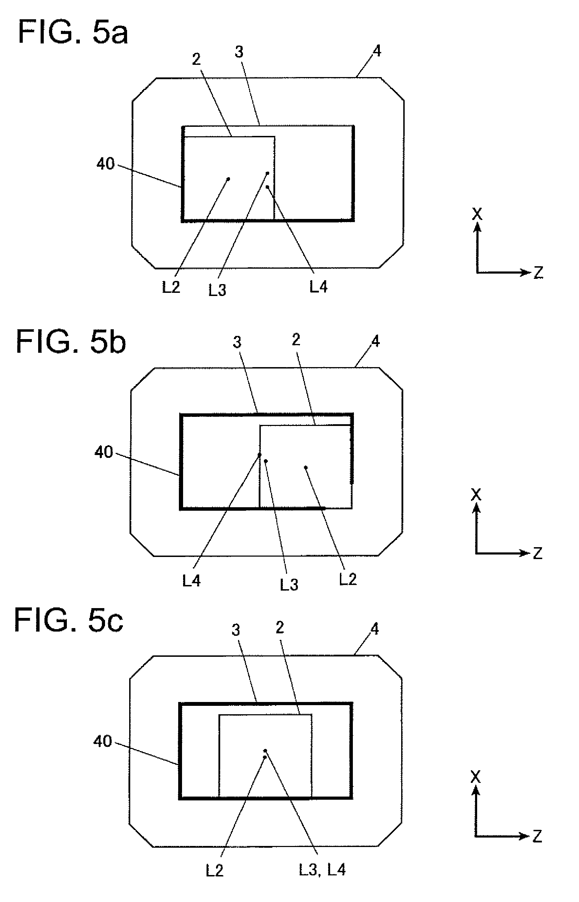

Also it was described that, central axis L4 of fixed part 40 was offset with regard to central axis L3 of driving rod 3 due to a reason that supporting member 4 was fixed by making close contact with three surfaces of side circumference surfaces of driving rod 3, but it may be that, as long as central axis L4 in the Y-axis direction of fixed part 40 is offset with regard to central axis L3 of driving rod 3, as shown in Figs. 5a and 5b, supporting member 4 makes close contact with whole surfaces of circumferential direction (four surfaces) with regard to side circumference surfaces of driving rod 3 and is fixed only by a part of this close contact surface (fixed part 40 is arranged only at this part). In this figure, fixed part 40 is indicated by bold lines.

Further, it was described that central axis L3 of driving rod 3 was offset in the positive X-axis direction with regard to central axis L2 of piezoelectric element 2, but, as shown in, for example, Fig. 3b or Fig. 5c, an embodiment may be that it is offset in the negative X-axis direction, and, as shown in Figs. 5a and 5b, an embodiment may be that it is offset in the positive X-axis direction and in the positive or negative Z-axis direction, or an embodiment, may be that it is offset only in the Z-axis direction (not illustrated).

Furthermore, it was described that supporting member 4 is fixed to driving rod 3, but an embodiment may be that supporting member 4 is fixed to piezoelectric element 2. In this case, an embodiment may be that central axis L4 of the aforesaid fixed part 40 is offset with regard to central axis L2 of piezoelectric element 2 due to a reason that fixed part 40 is fixed by making close contact with three surfaces of side circumference surfaces of piezoelectric element 2, or an embodiment may be that central axis L4 in the Y-axis direction of fixed part 40 is offset with regard to central axis L2 of piezoelectric element 2 due to a reason that supporting member 4 makes close contact with the opposite end surface to driving rod 3 of piezoelectric element 2 and is fixed only to a partial area of the aforesaid end surface.

Further, it was described that each of piezoelectric element 2 and driving rod 3 has a square columnar shape, but they may have a columnar shape of other forms such as a circular columnar shape and a triangle columnar shape.

### EXAMPLES

Hereinafter, the piezoelectric actuator relating to the present invention will be described in more detail with reference to examples and comparative examples, but the invention is not limited to the examples.

### [Example 1]

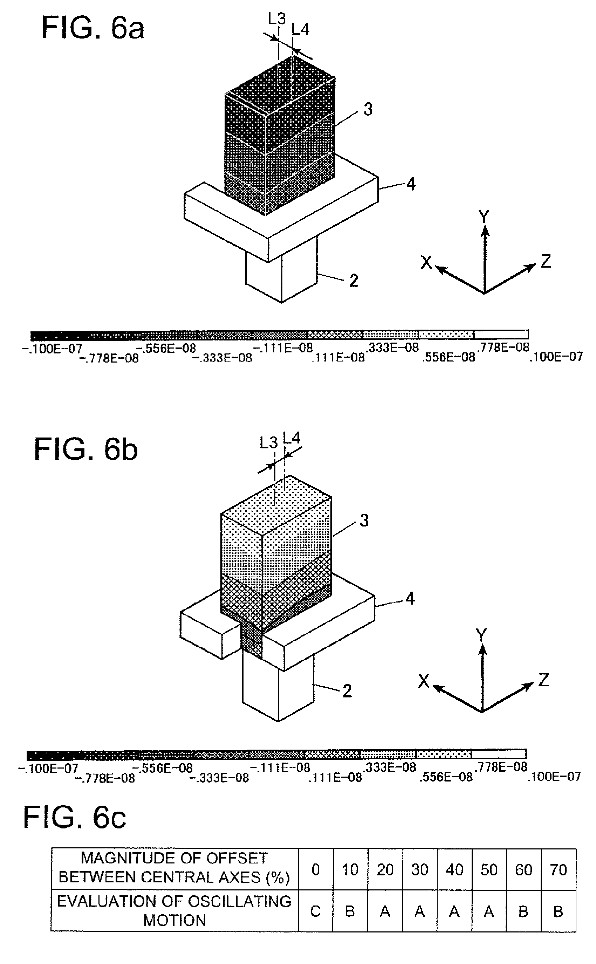

As an example of the piezoelectric actuator relating to the present invention, SIDM device 1 as shown in Fig. 6a was formed.

In SIDM device 1 of Fig. 6a, supporting member 4 is fixed by making close contact only with three surfaces excepting for one surface (the back left surface of the figure) in the positive X-axis direction of the side circumference surfaces of driving rod 3. With this structure, central axis L4 of fixed part 40 of supporting member 4 is offset in the negative direction with regard to central axis L3 of driving rod 3.

In SIDM device 1 of Fig. 6a, central axis L2 of piezoelectric element 2 is in a state of matching with central axis L3 of driving rod 3. In SIDM device 1, physical properties of driving rod 3, supporting member 4, piezoelectric element 2, and an adhesive used between members are as shown in Fig. 3c described above. The size of each member is as described in the above embodiment

When piezoelectric element 2was expanded and contracted by applying voltage of 3 volts to above SIDM device 1, it was confirmed that the amount of displacement of driving rod 3 along the X-axis direction differs as shown in Fig. 6a, and oscillating motion was performed in the positive X-axis direction by a maximum of 5.6 mm. In this Fig. 6a and Fig. 6b to be described, the amount of displacement in the X direction of each part of driving rod 3 is shown by hatching density, indicating that the thinner the density, the larger the displacement.

### [Example 2]

As an example of the piezoelectric actuator relating to the present invention, SIDM device 1 as shown in Fig. 6b was formed.

In SIDM device 1 of Fig. 6b, supporting member 4 is fixed by making close contact with four surfaces excepting for a corner part (the front right corner part of the figure) in the negative Z-axis direction and in the negative X-axis direction of the side circumference surfaces of driving rod 3. With this structure, central axis L4 of fixed part 40 of supporting members 4 is offset in the positive Z-axis direction and in the positive X-axis direction with regard to central axis L3 of driving rod 3.

In SIDM device 1 of Fig. 6b, central axis L2 of piezoelectric element 2 is in a state of matching with central axis L3 of driving rod 3. In this SIDM device 1, physical properties of driving rod 3, supporting member 4, piezoelectric element 2, and an adhesive used between members are as shown in Fig. 3c described above.

When piezoelectric element 2was expanded and contracted by applying voltage of 3 volts to above SIDM device 1, it was confirmed that the amount of displacement of driving rod 3 along the X-axis direction differs as shown in Fig. 6b, and oscillating motion was performed in the negative X-axis direction and in the negative Z-axis direction by a maximum of 5.6 mm.

### [Example 3]

As an example of the piezoelectric actuator relating to the present invention, a plurality of SIDM devices 1 as shown in above described Figs. 2 and 3 were formed.

In these SIDM devices 1, central axis L2 of piezoelectric element 2 and central axis L3 of driving rod 3 are in a state of being offset to each other, and magnitude of this offset differs (being a distance between central axis L2 and central axis L3, provided that the maximum size of piezoelectric element 2 in the XZ-cross section is set to be 100%; refer to Fig. 3a). The size of each member of this SIDM device 1 is the same as the above embodiment. In this SIDM device 1, physical properties of driving rod 3, supporting member 4, piezoelectric element 2, and an adhesive used between members are as shown in Fig. 3c described above.

When piezoelectric element 2was expanded and contracted by applying voltage of 3 volts to above each SIDM device 1 and the magnitude of oscillating motion was evaluated according to criterion below, the results shown in Fig. 6c were obtained.

C: No oscillating motion is performed.

B: Oscillating motion is performed, but the magnitude thereof is less than 1 mm.

A: The magnitude of oscillating motion is 1 mm or more.

From the above results, it was confirmed that in the case where central axes L2 and L3 are offset to each other, oscillating motion was generated. However, in the case where the magnitude of the offset is 0 to 10%, the amount of the offset was small, and thereby the oscillating motion was hardly measured, which meant that this was of no practical use. Also in the case where the magnitude of the offset is 60% or more, the oscillating motion was hardly measured as well, which meant that this was of no practical use. It was assumed that the reason was that the driving force due to change of form of piezoelectric element 2 was not effectively transferred to driving rod 3.

On the other hand, it was confirmed that, in the case where the magnitude of the offset was 20 to 50%, the oscillating motion became large.

### DESCRIPTION OF ALPHANUMERIC DESIGNATIONS

- 1:: a SIDM device (a piezoelectric actuator)
- 2:: a piezoelectric element
- 3:: a driving rod
- 4:: a supporting member.
- 5:: a moving body
- 40:: a fixed part
- L3:: a central axis of a piezoelectric element
- L3:: a central axis of a driving rod
- L4:: a central axis in the Z-axis direction of a fixing member

## Claims

1. A piezoelectric actuator, comprising;
a columnar piezoelectric element to expand and contract in an axis direction by application of voltage,
a columnar driving rod which is fixed to an end surface in the axis direction of the piezoelectric element, to be displaced by expansion and contraction of the piezoelectric element,
a supporting member having a fixed part fixed to the piezoelectric element or the driving rod, to support the piezoelectric element and the driving rod through the fixed part, and
a moving body which is frictionally engaged with the driving rod, to move in the rod direction of the driving rod,
wherein a central axis of the piezoelectric element and a central axis of the driving rod are offset.

2. A piezoelectric actuator, comprising;
a columnar piezoelectric element to expand and contract in an axis direction by application of voltage,
a columnar driving rod which is fixed to an end surface in the axis direction ofthe piezoelectric element, and to be displaced by expansion and contraction of the piezoelectric element,
a supporting member having a fixed part fixed to the piezoelectric element, to support the piezoelectric element and the driving rod through the fixed part, and
a moving body which is frictionally engaged with the driving rod, to move in the rod direction of the driving rod,
wherein a central axis of the piezoelectric element and a central axis in the axis direction ofthe piezoelectric element of the whole of the fixed part are offset

3. A piezoelectric actuator, comprising;
a columnar piezoelectric element to expand and contract in an axis direction by application of voltage,
a columnar driving rod which is fixed to an end surface in the axis direction of the piezoelectric element, to be displaced by expansion and contraction of the piezoelectric element,
a supporting member having a fixed part fixed to the driving rod, to support the piezoelectric element and the driving rod through the fixed part, and
a moving body which is frictionally engaged with the driving rod, to move in the rod direction of the driving rod,
wherein a central axis of the driving rod and a central axis in the rod direction of the driving rod of the whole of the fixed part are offset.

4. The piezoelectric actuator of Claim 1, wherein the central axis of the piezoelectric element is offset with regard to the central axis of the driving rod by a distance of 20 to 50%, provided that a maximum size in a section perpendicular to the rod direction of the driving rod is set to be 100%.

5. The piezoelectric actuator of Claim 2, wherein the supporting member is fixed only to a partial area in a circumferential direction of side circumference surfaces of the piezoelectric element.

6. The piezoelectric actuator of Claim 5, wherein the supporting member is formed in a U-shape and in contact only with the partial area of the side circumference surfaces ofthe piezoelectric element.

7. The piezoelectric actuator of Claim 2, wherein the supporting member is in contact with an opposite end surface with respect to the driving rod in the axis direction of the piezoelectric element, and at the same time, is fixed only to a partial area of the end surface, and the central axis in the axis direction of the piezoelectric clement of the whole of the fixed part is offset with regard to the central axis ofthe piezoelectric element.

8. The piezoelectric actuator of Claim 3, wherein the supporting member is fixed only to a partial area in a circumferential direction of side circumference surfaces of the driving rod.

9. The piezoelectric actuator of Claim 8, wherein the supporting member is formed in a U-shape and in contact only with the partial area of the side circumference surfaces of the driving rod.

10. The piezoelectric actuator of any on of claims 1, 3, 4, 8 and 9 Claim 1, wherein the supporting member is fixed to the driving rod, the central axis of the driving rod is offset in a prescribed direction with regard to the central axis of the piezoelectric element, and the central axis of the whole of the fixed part is offset in the prescribed direction with regard to the central axis of the driving rod.

11. The piezoelectric actuator of any on of claims 1, 3, 4, 8 and 9, wherein the supporting member is fixed to the driving rod, the central axis of the driving rod is offset in a prescribed direction with regard to the central axis of the piezoelectric element, and the central axis of the whole of the fixed part is offset in the opposite direction to the prescribed direction with regard to the central axis of the driving rod.
